# EUROPÄISCHE PATENTANMELDUNG

(11) **EP 0 779 456 A1**
(43) Veröffentlichungstag der Anmeldung: **18.06.1997**
(21) Anmeldenummer: 96114763.4
(22) Anmeldetag: 14.09.1996
(51) Int. Cl.: F16J 15/08, F16J 15/12

(54) **Dichtungsanordnung**

(30) Priorität: 14.12.1995 DE 19546655
(71) Anmelder: GOETZE Payen GmbH, D-57562 Herdorf (DE)
(72) Erfinder: Lönne, Klaus, Dipl.-Ing., 51399 Burscheid (DE); Zellerhoff, Manfred, Dipl.-Ing., 59494 Soest (DE)

(57) **Zusammenfassung**

Die Erfindung betrifft eine Dichtungsanordnung für eine Brennkraftmaschine, bei der eine metallische Flachdichtung (1) so eingebaut wird, daß die Sickenfüße (4) dem Bauteil mit der größten Oberflächenrauhigkeit zugeordnet sind.

## Beschreibung

Die Erfindung betrifft eine Dichtungsanordnung für eine Brennkraftmaschine mit einer zwischen Zylinderkopf und Zylinderblock angeordneten metallischen Flachdichtung mit einer elastomeren Auflage versehenen Metallage, welche zur Abdichtung von Brennraumöffnungen mindestens eine Sicke mit einer Sickenspitze und Sickenfüße aufweist.

Bei thermisch hochbeanspruchten Brennkraftmaschinen treten zwischen Zylinderkopf und Zylinderblock große Wärmeausdehungen auf. Auch bei Motoren, bei denen der Zylinderblock und der Zylinderkopf aus gleichen Materialien, z.B. aus Aluminium, bestehen, treten im Zylinderkopf höhere Temperaturen als im Zylinderblock auf, was dazu führt, daß die Zylinderköpfe sich stärker ausdehnen. Werden unterschiedliche Materialien verwendet, so ist die Relativbewegung noch größer. Bei einem Motorblock aus Gußeisen und einem Zylinderkopf aus Aluminium ist eine hohe Relativbewegung vorprogrammiert. In der Regel weist das Aluminiumbauteil geringere Oberflächenrauhigkeiten als das Graugußbauteil auf Zur Abdichtung der Bauteile weisen die hierzu verwendeten metallischen Flachdichtungen elastomere Auflagen in einer Dicke bis zu 35 µm auf.

Die EP 0 468 526 B1 offenbart eine solche beschichtete metallische Flachdichtung. Damit die Relativbewegung bei Wärmeausdehnung zwischen den abzudichtenden Bauteilen gering gehalten wird, soll gemäß dem Stand der Technik die Sickenspitze zum Zylinderblock gerichtet sein, falls der Zylinderkopf aus Aluminium besteht, da Gußeisen und Zylinderkopfdichtung ähnliche Wärmeausdehnungskoeffizienten aufweisen. Der Nachteil dieser Anordnung ist darin zu sehen, daß aufgrund der hohen Dichtpressung im Bereich der Sickenspitze und der immer noch vorhandenen Relativbewegung zwischen Sickenspitze und Zylinderblock die elastomere Auflage der Flachdichtung zerstört wird, im Extremfall Reibverschleiß der aufeinander gleitenden Metalle auftritt, was Undichtigkeiten zur Folge hat.

Der Erfindung liegt die Aufgabe zugrunde, eine gattungsgemäße Dichtungsanordnung im Hinblick auf die Dichtfunktion zu verbessern. Diese Aufgabe wird durch die kennzeichnenden Merkmale des Anspruchs 1 gelöst. Vorteilhafte Ausgestaltungen ergeben sich aus den Unteransprüchen.

Im Gegensatz zum Stand der Technik nutzt die erfindungsgemäße Dichtung die Relativbewegung der Bauteile dahingehend aus, daß der der Sickenspitze abgewandte Bereich, begrenzt durch die Sickenfüße, dem Bauteil mit der erhöhten Rauhigkeit zugeordnet wird. Hierdurch werden zwei Labyrinthdichtungen mit geringer Flächenpressung erzielt, die eine Zerstörung der elastomeren Schicht aufgrund der niedrigen Flächenpressung weitgehend ausschließt.

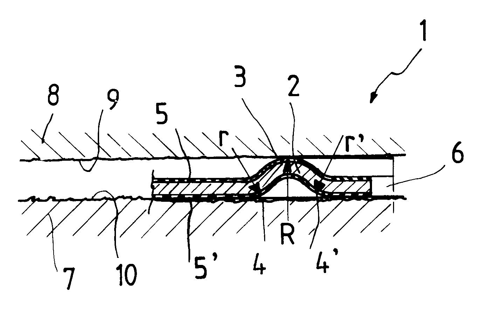

Die in der Figur in einem Ausschnitt dargestellte metallische Flachdichtung (1) ist aus einem Federstahl gebildet und dient zur Abdichtung des schematisch dargestellten Zylinderblocks (7) und Zylinderkopfs (8) einer Brennkraftmaschine. Die Flachdichtung weist am Randbereich einer Brennraumöffnung (6) eine umlaufende Sicke (2) mit einer Sickenspitze (3) auf Auf der gegenüberliegenden Seite wird die Sicke (2) durch Sickenfüße (4) begrenzt. Die Flachdichtung ist mit einer elastomeren Auflage (5) versehen. Erfindungsgemäß wird die Flachdichtung (1) derart in die Brennkraftmaschine eingebaut, daß die Sickenspitze (3) entweder dem Zylinderblock oder dem Zylinderkopf zugeordnet ist, in Abhängigkeit von der Oberflächenrauhigkeit.

Bei einer Brennkraftmaschine mit einem Zylinderkopf (8) aus Aluminium und einem Zylinderblock (7) aus Grauguß, wie in der Zeichnung dargestellt, weist die Sickenspitze (3) zum Zylinderkopf (8). Dieser Anordnung liegt die Erkenntnis zugrunde, daß die glatte Oberfläche (9) des Aluminium-Zylinderkopfes (8) keine Beschädigung der elastomeren Auflage (5) auf der Sickenspitze (3) hervorrufen kann, obwohl hier ein Bereich mit hoher Flächenpressung vorliegt. Die Sickenfüße (4) liegen auf dem Bauteil mit großer Rauhigkeit (10), dafür ist hier die Flächenpressung wesentlich geringer, so daß auch in diesem Bereich keine Zerstörung der Auflage (5) eintritt. Um eine gleichmäßige Flächenpressung zu erhalten, ist die Sicke (2) so ausgelegt, daß der Radius (R) der Sickenspitze (3) etwa dem Radius (r) der Sickenfüße entspricht. Auf diese Weise ist eine harmonische Sickengeometrie geschaffen.

## Patentansprüche

1. Dichtungsanordnung für eine Brennkraftmaschine mit einer zwischen Zylinderkopf und Zylinderblock angeordneten metallischen Flachdichtung mit einer elastomeren Auflage versehenen Metallage, welche zur Abdichtung von Brennraumöffnungen mindestens eine Sicke mit einer Sickenspitze und Sickenfüße aufweist, dadurch gekennzeichnet, daß die Sickerfüße (4) entweder dem Zylinderkopf (8) oder dem Zylinderblock (7) zugewandt sind, und zwar abhängig davon, welches Bauteil die größte Oberflächenrauhigkeit (9,10) aufweist, so daß im Kontaktbereich der Sickenfüße (4) zwei Zonen je Sicke mit geringer Flächenpressung und großer Labyrinthdichtung erzeugt werden.

2. Dichtungsanordnung nach Anspruch 1, dadurch gekennzeichnet, daß der Zylinderkopf (8) aus Leichtmetall und der Zylinderblock (7) aus Grauguß besteht, so daß die Sickenfüße (4) auf den Zylinderblock weisen.

3. Dichtungsanordnung nach den Ansprüchen 1 und 2, dadurch gekennzeichnet, daß die Sickenfüße (4) einen Radius (r) aufweisen, der etwa dem Radius (R) der Sickenspitze (3) entspricht, und daß die Radien (r,R) ineinander übergehen.
